# EUROPÄISCHE PATENTSCHRIFT

(11) **EP 0 970 851 B1**
(45) Veröffentlichungstag und Bekanntmachung des Hinweises auf die Patenterteilung: **01.10.2003**
(21) Anmeldenummer: 99112941.2
(22) Anmeldetag: 05.07.1999
(51) Int. Cl.: B60R 5/04

(54) **Griffanordnung für eine am Boden des Kofferraums oder Laderaums befindliche Abdeckung**
Handle for a floor cover of a luggage space or boot
Poignée pour un couvercle sous le fond d'un compartiment à baggages ou coffre

(30) Priorität: 07.07.1998 DE 19830306; 07.07.1998 DE 19830304
(43) Veröffentlichungstag der Anmeldung: 12.01.2000
(73) Patentinhaber: Volkswagen Aktiengesellschaft, 38436 Wolfsburg (DE)
(72) Erfinder: Rosenthal, Dirk, 38300 Wolfenbüttel (DE); Mosel, Willi, 38465 Brome (DE)

(56) Entgegenhaltungen:
- EP-A- 0 713 806
- DE-U- 29 519 494
- GB-A- 2 276 814
- US-A- 5 056 846
- US-A- 5 056 858
- PATENT ABSTRACTS OF JAPAN vol. 8, no. 32 (M-275), 10. Februar 1984 (1984-02-10) & JP 58 188763 A (NISSAN), 4. November 1983 (1983-11-04)

## Beschreibung

Die Erfindung betrifft eine Griffanordnung für eine am Boden des Kofferraums oder Laderaums eines Kraftfahrzeugs befindliche Abdeckung nach dem Oberbegriff des Anspruchs 1.

Eine gattungsgemäße Griffanordnung ist beispielsweise aus der US 5,056,858 bekannt.

Es ist allgemein bekannt, Abdeckungen am Kofferraumboden oder im Laderaum eines Kraftfahrzeugs mit einem Griffloch oder einer Halteschlaufe zu versehen, damit die Abdeckung zum Hochklappen erfässt werden kann. Eine Griffanordnung, die lediglich als Griffloch in einer solchen Abdeckung ausgebildet ist, hat den Nachteil, dass durch das Griffloch kleinere Gegenstände hindurchfallen können, wenn nicht zusätzlich ein darüber liegender Teppichboden oder dergleichen das Griffloch überdeckt. Bei vorhandenem zusätzlichen Teppichboden hat ein solches Griffloch den Nachteil, dass der Teppichboden an dieser Stelle von der Abdeckung nicht unterstützt ist und somit in das Griffloch eingedrückt werden kann.

Eine Griffanordnung in Form einer Halteschlaufe hat den Nachteil, dass durch die Halteschlaufe eine Unebenheit im Kofferraumboden entsteht, die eine Beeinträchtigung für das Ladegut oder für ein optimales Beladen mit sich bringen kann.

Die aus der US 5,056,858 bekannte Griffanordnung besitzt einen Griffbügel, der als Ziehgriff in Ruhestellung bodenbündig in einer Mulde an der im Kofferraum eines Kraftfahrzeugs befindlichen Abdeckung einliegt und aus der Mulde in eine Greifposition verschwenkbar ist. Die Abdeckung weist dabei auf ihrer Rückseite eine zweite, entsprechende Griffanordnung auf.

Aufgabe der vorliegenden Erfindung ist es, eine stabile Griffanordnung für eine am Kofferraumboden oder Laderaumboden eines Kraftfahrzeugs befindliche Abdeckung zu schaffen, die ein bequemes Ergreifen der Abdeckung ermöglicht und keine Behinderung für auf der Abdeckung abgestelltes Ladegut darstellt.

Diese Aufgabe wird mit den Merkmalen des Anspruchs 1 gelöst.

Gemäß Anspruch 1 weist die Griffanordnung zwei Griffbügel auf, die jeweils als Ziehgriff in Ruhestellung bodenbündig in einer Mulde an der Abdeckung einliegen und aus entgegengesetzt ausgerichteten, horizontalen Ruhepositionen in eine gemeinsame Griffposition verschwenkbar sind, wobei die Schwenkbewegung der beiden Griffbügel mechanisch gekoppelt ist.

In der Ruheposition können somit die beiden flachen Griffbügel in einer entsprechend flachen Mulde an der Oberfläche der Abdeckung bündig einliegen, so daß keine störende Erhebung im Bereich der Griffanordnung entsteht. Außerdem ist die Abdeckung auch im Bereich der Griffanordnung vollständig geschlossen. Werden die Griffbügel in die gemeinsame Griffposition verschwenkt, so entsteht dadurch ein aus beiden Griffbügeln bestehendes Griffelement, welches die doppelte Griffstärke aufweist wie ein einzelner Griffbügel. Somit erhält man ein sehr stabiles Griffelement, auch wenn die einzelnen Griffbügel verhältnismäßig dünnwandig ausgebildet sind. Das heißt, daß die Griffbügel mit verhältnismäßig geringer Wandstärke aus Kunststoff oder Metall hergestellt sein können, so daß auch die Mulden, in denen die Griffbügel einliegen, entsprechend flach ausgebildet sein können. Die Griffbügel erfordern somit zusammen mit den Mulden nur eine geringe Einbautiefe.

Die Schwenkachsen der beiden Griffbügel verlaufen vorzugsweise in geringem Abstand parallel zueinander, damit die Schwenkbewegung der Griffbügel auf einfache Weise gekoppelt werden kann.

Eine bevorzugte Ausführung sieht vor, daß die Griffbügel über an ihren Bügelenden im Bereich der Schwenkachsen ausgebildete Zahnkranzsegmente gekoppelt sind. Die Zahnkranzsegmente greifen ineinander, so daß beim Anheben eines der beiden Griffbügel der andere Griffbügel um exakt den gleichen Winkel angehoben wird, bis sich beide Griffbügel in der vertikalen gemeinsamen Griffposition befinden.

Die mechanische Kopplung kann auch über ein Getriebe erfolgen, welches an den Schwenkachsen beider Griffbügel wirksam ist. Beispielsweise kann auf jeder Schwenkachse ein Zahnrad befestigt sein, so daß über die beiden starr mit den Schwenkachsen verbundenen Zahnräder die Kopplung der gegensinnigen Schwenkbewegungen beider Griffbügel erfolgt. Mit dem Getriebe kann eine an sich bekannte Softbremse in Wirkverbindung stehen, die eine Dämpfung der Schwenkbewegung bewirkt. Eine solche Softbremse kann aber auch direkt an einer der Schwenkachsen der beiden Griffbügel angreifen.

Die Griffbügel sind vorzugsweise mittels eines Rückhalteelements in der Ruheposition gesichert und verschwenken nach Auslösen des Rückhalteelements in die Greifposition. Bei einer Griffanordnung mit zwei mechanisch gekoppelten Griffbügeln ist es z. B. ausreichend, daß lediglich an einem der Griffbügel ein derartiges Rückhalteelement vorgesehen ist. Die zum Verschwenken des Griffbügels erforderliche Kraft wird in einer Spiralfeder oder einem anderen Kraftspeicher gespeichert. Als Rückhalteelement kann ein an sich bekannter Tippverschluß Verwendung finden, der beim Antippen des in Ruhestellung befindlichen Griffbügels entriegelt wird. Wird der Griffbügel erneut in die Ruheposition niedergedrückt, so wird dabei beispielsweise die verwendete Spiralfeder wieder gespannt und der Griffbügel in der Ruheposition mittels des Tippverschlusses wieder verriegelt. Ein solcher Tippverschluß ist auch unter der Bezeichnung "Pushelement" bekannt. Durch das selbsttätige Verschwenken des Griffbügels ist es möglich, diesen in Verbindung mit einem Tippverschluß absolut bodenbündig anzuordnen, so daß keinerlei störende Erhebungen oder Aussparungen im Bereich des Ziehgriffs erforderlich sind.

Wird als Rückhalteelement anstelle des Tippverschlusses ein Dauermagnet verwendet, so läßt sich dadurch ein als Stahlring ausgebildeter Griffbügel gegen die Kraft einer Spiralfeder oder eines anderen Kraftspeichers sicher in der Ruheposition halten. Das Auslösen und Verschwenken des Griffbügels erfolgt in diesem Fall dadurch, daß der Griffbügel von Hand aus der Ruheposition so weit ausgelenkt wird, daß der Dauermagnet den Griffbügel nicht mehr niederhalten kann. Auch in diesem Fall verschwenkt der Griffbügel dann selbsttätig aus der horizontalen Ruheposition in eine vertikale Greifposition.

Der Kraftspeicher kann als Spiralfeder, Gummielement, Druck- oder Zugfeder oder in anderer Weise ausgebildet sein, der beim Herunterdrücken des jeweiligen Griffbügels in die Ruheposition gespannt wird. Wird der Griffbügel aus der Ruheposition ausgelöst, so kann eine Softbremse verhindern, daß der Griffbügel ruckartig in die Greifposition schnellt. Durch die Verwendung einer Softbremse erfolgt ein sanftes Verschwenken der Griffbügel aus der Ruheposition in die etwa um 90° dazu versetzte Greifposition.

Eine weitere bevorzugte Ausführung sieht vor, daß in der Abdeckung eine Eingriffmulde zum Untergreifen eines der beiden Griffbügel ausgebildet ist. Bei einer Griffanordnung mit zwei mechanisch gekoppelten Griffbügeln kann es dabei ausreichend sein, daß lediglich eine Eingriffmulde als Fingereingriff im Bereich eines der beiden Griffbügel vorgesehen ist.

Bei einer besonders vorteilhaften Ausführung sind die Griffbügel an einem um eine zusätzliche Schwenkachse verschwenkbaren Trägerteil angeordnet, an dem ein Haken absteht, der bei vollständig hochgeklappter Abdeckung am Kraftfahrzeug einhängbar ist. Dadurch wird der Zugriff auf den sonst von der Abdeckung abgedeckten Ablageraum, in dem beispielsweise das Reserverad einliegt, wesentlich erleichtert. Die am Kraftfahrzeug eingehängte Abdeckung verbleibt also selbsttätig in der geöffneten Stellung, so daß bequem auf den unter die Abdeckung befindlichen Ablageraum zugegriffen werden kann.

Der Haken kann für eine am Kofferraumboden angeordnete Abdeckung so ausgebildet sein, daß er bei geöffneter Abdeckung in die unterhalb des Rückfensters verlaufende Regenrinne einhängbar ist.

Somit sind keine zusätzlichen Halterungen erforderlich, die mit dem Haken an der Griffanordnung korrespondieren.

Der Haken steht vorzugsweise an dem Trägerteil nach unten ab, so daß er bei geschlossener Abdeckung und bei in Ruheposition befindlicher Griffanordnung nach unten in den unter der Abdeckung befindlichen Ablageraum weist. Der Haken hat somit keinen störenden Einfluß auf den Laderaum über der Abdeckung.

Das Trägerteil, an dem die Griffbügel verschwenkbar angebracht sind, liegt vorzugsweise unter einer Federvorspannung in einer Aussparung der Abdeckung ein. Werden die Griffbügel nach oben gezogen, so schwenkt dabei auch das Trägerteil um die zusätzliche, mit der Abdeckung verbundene Schwenkachse nach oben, und zwar gegen die Vorspannung einer Feder. Die von der Feder auf das Trägerteil ausgeübte Vorspannung hat nicht nur den Vorteil, daß das Trägerteil bei geschlossener Abdeckung klapperfrei an der Abdeckung niedergehalten wird, sondern daß auch bei geöffneter Abdeckung der am Trägerteil abstehende Haken sicher in der Regenrinne oder einem anderen Halteelement gehalten wird.

Wie bei der Griffanordnung kann auch die Schwenkbewegung des Trägerteils mittels einer Softbremse gedämpft werden. Die Softbremse bewirkt, daß beim Loslassen der Griffbügel das Trägerteil nicht schlagartig in seine Ausgangsposition zurückfedert, sondern eine langsame Schwenkbewegung ausführt.

Anhand einer Zeichnung wird die Erfindung nachfolgend näher erläutert.

Es zeigen:
- Fig. 1: den Längsschnitt durch eine Griffanordnung, deren Bügelgriffe über ein Getriebe gekoppelt sind,
- Fig. 2: die Draufsicht auf die in Fig. 1 dargestellte Griffanordnung,
- Fig. 3: eine Griffanordnung, bei der die schwenkbaren Griffbügel an einem verschwenkbaren Trägerteil angeordnet sind,
- Fig. 4: den Längsschnitt der Griffanordnung von Fig. 3, und
- Fig. 5: eine stark vereinfachte Darstellung der Griffanordnung von Fig. 3 an einer Abdeckung im Kofferraum eines Kraftfahrzeugs.

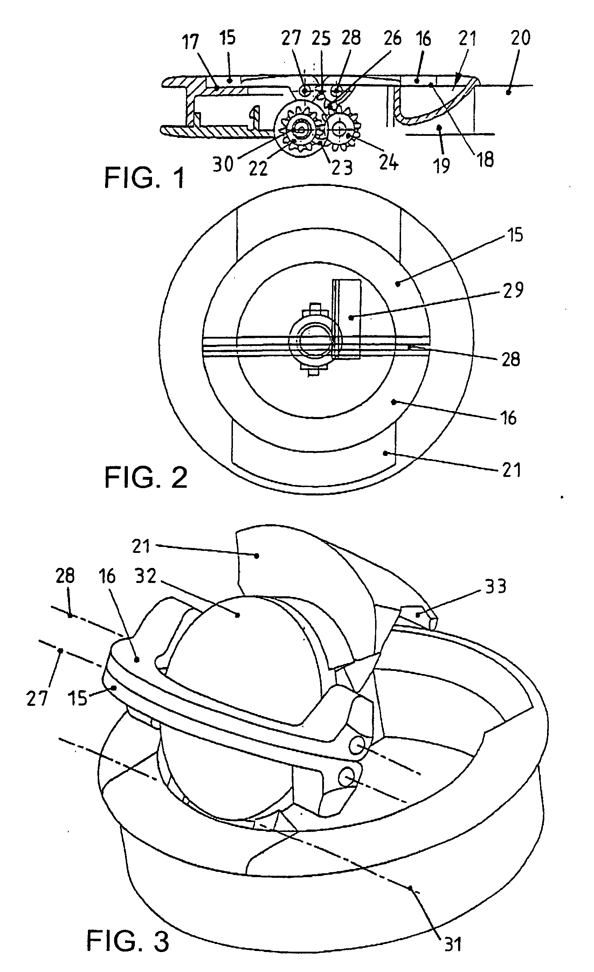

Die in Fig. 1 dargestellte Griffanordnung besteht aus zwei Griffbügel 15, 16, die sieh hier in der Ruhestellung, die auch als Ausgangsstellung bezeichnet werden kann, befinden. Die Griffbügel 15, 16 sind entgegengesetzt horizontal ausgerichtet und liegen in entsprechenden Mulden 17, 18 der Griffanordnung ein.

Die Griffanordnung liegt in einer Aussparung 19 einer hier nur angedeuteten Abdeckung 20 ein. Damit die Griffbügel 15, 16 bequem in eine hier nicht dargestellte vertikale Griffposition verschwenkt werden können, ist an der Griffanordnung ein Fingereingriff 21 vorgesehen, durch den unter den Griffbügel 16 gegriffen und dieser um 90° nach oben geschwenkt werden kann. Bei dieser Schwenkbewegung des Griffbügels 16 bewegt sich der Griffbügel 15 gleichermaßen bis in die vertikale Griffposition nach oben, da beide Griffbügel 15, 16 über ein Getriebe 22 kinematisch gekoppelt sind. Das Getriebe besteht aus den beiden Zahnrädern 23, 24, die wiederum an Zahnkranzsegmenten 25, 26 angreifen. Die Zahnkranzsegmente 25, 26 befinden sich an den Enden der Griffbügel 15, 16, an denen sich deren Schwenkachsen 27, 28 befinden.

In Fig. 2 ist der Verlauf der Schwenkachse 28 des Griffbügels 16 dargestellt. Der Fingereingriff 21 zum Anheben der beiden Griffbügel 15, 16 ist als eine an den Griffbügel 16 angrenzende Aussparung ausgebildet. Eine Softbremse 29, die als Viskosebremse ausgebildet sein kann, dient zur Dämpfung der Schwenkbewegung beider Griffbügel, die mittels Federkraft in der dargestellten Ruheposition niedergehalten werden. Werden die Bügel nach oben verschwenkt, wird eine beispielsweise als Spiralfeder 30 (Fig. 1) ausgebildete Feder gespannt, die in Fig. 1 an dem Zahnrad 23 des Getriebes 22 angreift.

Die Griffbügel 15, 16 können auch ohne Getriebe 22 kinematisch gekoppelt werden, indem an ihren unteren Enden im Bereich ihrer Schwenkachsen 27, 28 Zahnkranzsegmente so ausgebildet sind, daß das Zahnkranzsegment des einen Griffbügels in das Zahnkranzsegment des anderen Griffbügels eingreift.

Die in Fig. 3 dargestellte Griffanordnung besitzt ebenfalls, wie die in Fig. 1 und Fig. 2 dargestellte Griffanordnung, um Schwenkachsen 27, 28 verschwenkbare Griffbügel 15, 16, die bei der Ausführung von Fig. 3 jedoch an einem um eine zusätzliche, dritte Schwenkachse 31 verschwenkbaren Trägerteil 32 angeordnet sind. An dem Trägerteil 32 ist ebenfalls ein Fingereingriff 21 vorgesehen, um den Griffbügel 16 bequem greifen und aus der Ruheposition in die in Fig. 3 dargestellte Griffposition verschwenken zu können.

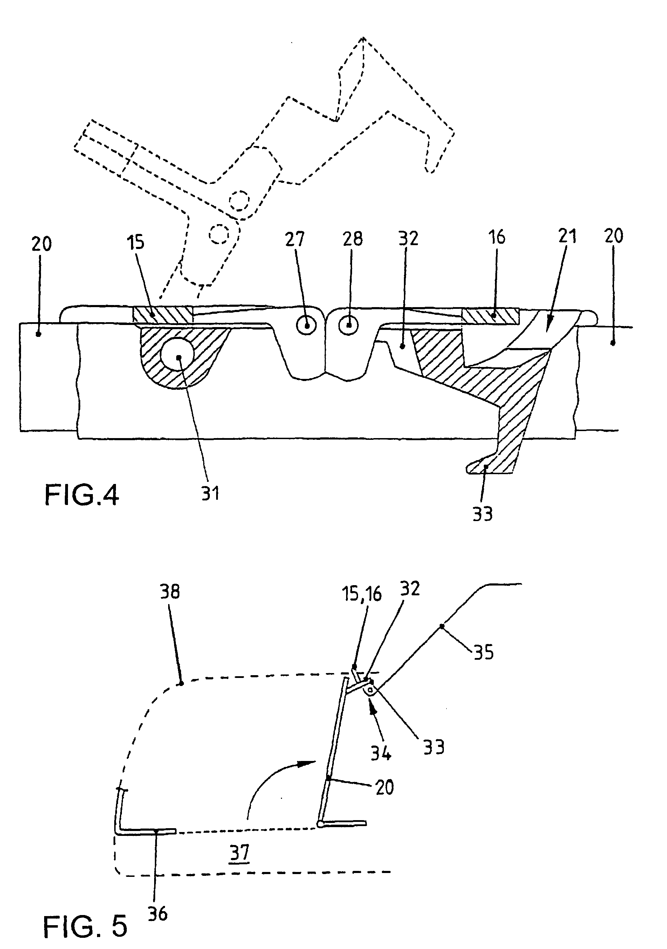

An dem Trägerteil 32 steht unterhalb des Fingereingriffs 21 ein Haken 33 ab, mit dem sich eine hochgeklappte Abdeckung 20, wie in Fig. 5 gezeigt, an der Regenrinne 34 unterhalb des Rückfensters 35 eines Kraftfahrzeugs einhängen läßt.

Der in Fig. 4 dargestellte Längsschnitt zeigt die Griffanordnung von Fig. 3 in der Ruhestellung. Mit unterbrochenen Linien ist außerdem das aus der Ruhestellung verschwenkte Trägerteil mit in Griffposition befindlichen Griffbügeln dargestellt.

In der Ruheposition liegen die Griffbügel 15, 16 in Mulden des Trägerteils 32 ein. Das gesamte Trägerteil 32 ist um die Schwenkachse 31 in die mit unterbrochenen Linien dargestellte Position nach oben verschwenkbar. Zu diesem Zweck kann der Griffbügel 16 am Fingereingriff 21 untergriffen und nach oben um 90° verschwenkt werden.

In der stark vereinfachten Darstellung von Fig. 5 ist eine hochgeklappte Abdeckung 20, die Teil eines Kofferraumbodens 36 ist, ersichtlich. Der sonst unter der geschlossenen Abdeckung 20 angeordnete Ablageraum 37 ist bei geöffnetem Kofferraumdeckel 38 frei zugänglich. Die geöffnete Abdeckung 20 ist mit dem an der hochgeschwenkten Griffanordnung ausgebildeten Haken 33 in der Regenrinne 34 unterhalb des Rückfensters 35 eingehängt.

An dem Trägerteil 32 kann ein Federelement im Bereich der Schwenkachse 31 (Fig. 4) in der Weise angreifen, daß das Trägerteil 32 in der Ausgangsposition unter Vorspannung gehalten wird. Als Federelement kann beispielsweise eine Spiralfeder vorgesehen sein, die beim Hochschwenken des Trägerteils 32 gespannt wird, so daß das Trägerteil 32 selbsttätig mittels Federkraft in die Ruheposition zurückkehren kann. Dabei kann wie bei den Griffbügeln 15, 16 eine Softbremse zur Dämpfung der Schwenkbewegung eingesetzt werden.

### BEZUGSZEICHENLISTE

- 15: Griffbügel
- 16: Griffbügel
- 17: Mulde
- 18: Mulde
- 19: Aussparung
- 20: Abdeckung
- 21: Fingereingriff
- 22: Getriebe
- 23: Zahnrad
- 24: Zahnrad
- 25: Zahnkranzsegment
- 26: Zahnkranzsegment
- 27: Schwenkachse
- 28: Schwenkachse
- 29: Softbremse
- 30: Spiralfeder
- 31: Schwenkachse
- 32: Trägerteil
- 33: Haken
- 34: Regenrinne
- 35: Rückfenster
- 36: Kofferraumboden
- 37: Ablageraum
- 38: Kofferraumdeckel

## Patentansprüche

1. Griffanordnung für eine am Boden des Kofferraums oder Laderaums eines Kraftfahrzeugs befindliche Abdeckung (20), die einen Ablageraum (37) unter der Abdeckung abdeckt und die an wenigstens einem Griffbügel hochklappbar oder anhebbar ist.
**gekennzeichnet durch**
zwei Griffbügel (15, 16), die jeweils als Ziehgriff in Ruhestellung bodenbündig in einer Mulde an der Abdeckung (20) einliegen und aus entgegengesetzt ausgerichteten, horizontalen Ruhepositionen in eine gemeinsame Griffposition verschwenkbar sind, wobei
die Schwenkbewegung der beiden Griffbügel (15, 16) mechanisch gekoppelt ist.

2. Griffanordnung nach Anspruch 1, **dadurch gekennzeichnet, daß** die Schwenkachsen (27, 28) der beiden Griffbügel (15, 16) in geringem Abstand parallel zueinander verlaufen.

3. Griffanordnung nach Anspruch 1 oder Anspruch 2, **dadurch gekennzeichnet, daß** die Griffbügel (15, 16) über an ihren Bügelenden im Bereich der Schwenkachsen (27, 28) ausgebildete Zahnkranzsegmente (25, 26) kinematisch gekoppelt sind.

4. Griffanordnung nach einem der Ansprüche 1 bis 3, **dadurch gekennzeichnet, daß** die Schwenkbewegung der Griffbügel (15, 16) über ein Getriebe (22) gekoppelt ist.

5. Griffanordnung nach einem der Ansprüche 1 bis 4, **dadurch gekennzeichnet,**
**daß** ein Rückhalteelement die Griffbügel (15, 16) gegen die Kraft eines Kraftspeichers (30) in der Ruheposition hält, und
**daß** nach Auslösen des Rückhalteelements der Kraftspeicher (30) die Griffbügel (15, 16) in die Greifposition verschwenkt.

6. Griffanordnung nach Anspruch 5, **dadurch gekennzeichnet, daß** das Rückhalteelement ein Tippverschluß ist, der am Umfangsrand eines der beiden Griffbügel (15, 16) angreift.

7. Griffanordnung nach Anspruch 6, **dadurch gekennzeichnet, daß** das Rückhalteelement ein Dauermagnet ist, der auf die aus magnetischem Material bestehende Unterseite eines der beiden Griffbügel (15, 16) wirkt.

8. Griffanordnung nach einem der Ansprüche 5 bis 7, **dadurch gekennzeichnet, daß** der Kraftspeicher eine am im Bereich der Schwenkachse (27, 28) des jeweiligen Griffbügels (15, 16) angeordnete Spiralfeder (30) ist, die beim Herunterdrücken des Griffbügels (15, 16) in die Ruheposition gespannt wird.

9. Griffanordnung nach einem der Ansprüche 1 bis 8, **dadurch gekennzeichnet, daß** die Schwenkbewegung des einen der beiden Griffbügel (15, 16) mittels einer Softbremse (29) gedämpft ist, wobei vorzugsweise eine am Griffbügel (15, 16) angreifende Softbremse (29) dessen Schwenkbewegung beim Verschwenken aus der Ruheposition in die Greifposition dämpft.

10. Griffanordnung nach einem der Ansprüche 1 bis 10, **dadurch gekennzeichnet, daß** angrenzend an wenigstens einen der Griffbügel (15, 16) eine Eingriffmulde (21) zum Untergreifen des Griffbügels (15, 16) ausgebildet ist.

11. Griffanordnung nach einem der Ansprüche 1 bis 10, **dadurch gekennzeichnet, daß** einer der Griffbügel (15, 16) an einem um eine zusätzliche Schwenkachse (31) verschwenkbaren Trägerteil (32) angeordnet ist, an dem ein Haken (33) absteht, der bei vollständig hochgeklappter Abdeckung (20) am Kraftfahrzeug einhängbar ist.

12. Griffanordnung nach Anspruch 11, **dadurch gekennzeichnet, daß** der Haken (33) in die Regenrinne (34) unterhalb des Rückfensters (35) einhängbar ist.

13. Griffanordnung nach Anspruch 11 oder Anspruch 12, **dadurch gekennzeichnet, daß** der Haken (33) an der der zusätzlichen Schwenkachse (31) abgewandten Seite des Trägerteils (32) nach unten absteht.

14. Griffanordnung nach einem der Ansprüche 11 bis 13, **dadurch gekennzeichnet, daß** das Trägerteil (32) vorgespannt in einer Aussparung (19) der Abdeckung (20) einliegt und gegen die Kraft einer Feder um die zusätzliche Schwenkachse (31) nach oben verschwenkbar ist.

15. Griffanordnung nach einem der Ansprüche 11 bis 14, **dadurch gekennzeichnet, daß** eine Softbremse die Schwenkbewegung des Trägerteils (32) dämpft.

## Claims

1. Handle arrangement for a cover (20) which is located on the floor of the boot compartment or loading compartment of a motor vehicle and which covers a storage compartment (37) below the cover and which can be swung up or raised at at least one handle bracket, **characterized by** two handle brackets (15, 16) which, in each case, in the form of a pull-type handle, lie in the rest position flush with the floor in a recess on the cover (20) and can be pivoted from horizontal rest positions orientated in an opposed manner into a common handle position, with the pivoting movement of the two handle brackets (15, 16) being coupled mechanically.

2. Handle arrangement according to Claim 1, **characterized in that** the pivot axes (27, 28) of the two handle brackets (15, 16) run parallel to each other at a small distance.

3. Handle arrangement according to Claim 1 or Claim 2, **characterized in that** the handle brackets (15, 16) are kinematically coupled via toothed-ring segments (25, 26) formed at their bracket ends in the region of the pivot axes (27, 28).

4. Handle arrangement according to one of Claims 1 to 3, **characterized in that** the pivoting movement of the handle brackets (15, 16) is coupled via a gear (22).

5. Handle arrangement according to one of Claims 1 to 4, **characterized in that** a retaining element holds the handle brackets (15, 16) in the rest position counter to the force of a force accumulator (30), and **in that**, after release of the retaining element, the force accumulator (30) pivots the handle brackets (15, 16) into the grasping position.

6. Handle arrangement according to Claim 5, **characterized in that** the retaining element is a touch-control fastener which engages on the circumferential edge of one of the two handle brackets (15, 16).

7. Handle arrangement according to Claim 6, **characterized in that** the retaining element is a permanent magnet which acts on the lower side, which consists of magnetic material, of one of the two handle brackets (15, 16).

8. Handle arrangement according to one of Claims 5 to 7, **characterized in that** the force accumulator is a spiral spring (30) which is arranged in the region of the pivot axis (27, 28) of the respective handle bracket (15, 16) and is clamped into the rest position when the handle bracket (15, 16) is pressed down.

9. Handle arrangement according to one of Claims 1 to 8, **characterized in that** the pivoting movement of one of the two handle brackets (15, 16) is damped by means of a soft brake (29), with preferably one soft brake (29) which engages on the handle bracket (15, 16) damping the pivoting movement thereof when being pivoted from the rest position into the grasping position.

10. Handle arrangement according to one of Claims 1 to 10, **characterized in that** an engagement recess (21) for engaging below the handle bracket (15, 16) is formed adjacent to at least one of the handle brackets (15, 16).

11. Handle arrangement according to one of Claims 1 to 10, **characterized in that** one of the handle brackets (15, 16) is arranged on a support part (32) which can be pivoted about an additional pivot axis (31) and on which a hook (33) protrudes which, when the cover (20) is swung completely upward, can be hooked onto the motor vehicle.

12. Handle arrangement according to Claim 11, **characterized in that** the hook (33) can be hooked into the rain channel (34) below the rear window (35).

13. Handle arrangement according to Claim 11 or Claim 12, **characterized in that** the hook (33) protrudes downwards on that side of the support part (32) which faces away from the additional pivot axis (31).

14. Handle arrangement according to one of Claims 11 to 13, **characterized in that** the support part (32) lies in a prestressed manner in a cutout (19) of the cover (20) and can be pivoted upwards about the additional pivot axis (31) counter to the force of the spring.

15. Handle arrangement according to one of Claims 11 to 14, **characterized in that** a soft brake damps the pivoting movement of the support part (32).

## Revendications

1. Agencement de poignée pour un couvercle (20) situé au fond du compartiment à bagages ou du coffre d'un véhicule automobile, qui recouvre un compartiment de rangement (37) sous le couvercle et qui peut être rabattu vers le haut ou relevé au niveau d'au moins une anse de poignée,
**caractérisé par**
deux anses de poignée (15, 16) qui se trouvent chacune sous forme de poignée de traction en position de repos en affleurement avec le fond dans un creux au niveau du couvercle (20) et qui peuvent être pivotées dans une position de saisie commune depuis des positions de repos horizontales orientées de manière opposée, le mouvement de pivotement des deux anses de poignée (15, 16) étant accouplé mécaniquement.

2. Agencement de poignée selon la revendication 1, **caractérisé en ce que** les axes de pivotement (27, 28) des deux anses de poignée (15, 16) s'étendent parallèlement l'un à l'autre à faible distance l'un de l'autre.

3. Agencement de poignée selon la revendication 1 ou la revendication 2, **caractérisé en ce que** les anses de poignée (15, 16) sont accouplées de manière cinématique par le biais de segments de couronnes dentées (25, 26) réalisés sur les extrémités des anses dans la région des axes de pivotement (27, 28).

4. Agencement de poignée selon l'une quelconque des revendications 1 à 3, **caractérisé en ce que** le mouvement de pivotement des anses de poignée (15, 16) est accouplé par le biais d'un engrenage (22).

5. Agencement de poignée selon l'une quelconque des revendications 1 à 4, **caractérisé en ce qu'**un élément de retenue maintient en position de repos les anses de poignée (15, 16) à l'encontre de la force d'un accumulateur de force (30), et **en ce qu'**après la libération de l'élément de retenue, l'accumulateur de force (30) pivote les anses de poignée (15, 16) dans la position de saisie.

6. Agencement de poignée selon la revendication 5, **caractérisé en ce que** l'élément de retenue est une fermeture à impulsion, qui vient en prise sur le bord périphérique de l'une des deux anses de poignée (15, 16).

7. Agencement de poignée selon la revendication 6, **caractérisé en ce que** l'élément de retenue est un aimant permanent qui agit sur le côté inférieur de l'une des deux anses de poignée (15, 16), se composant d'un matériau magnétique.

8. Agencement de poignée selon l'une quelconque des revendications 5 à 7, **caractérisé en ce que** l'accumulateur de force est un ressort spiral (30) disposé dans la région de l'axe de pivotement (27, 28) de l'anse de poignée respective (15, 16), qui est sous tension dans la position de repos par l'abaissement de l'anse de poignée (15, 16).

9. Agencement de poignée selon l'une quelconque des revendications 1 à 8, **caractérisé en ce que** le mouvement de pivotement de l'une des deux anses de poignée (15, 16) est amorti au moyen d'un frein doux (29), un frein doux (29) venant en prise avec l'anse de poignée (15, 16) amortissant de préférence son mouvement de pivotement lors du pivotement hors de la position de repos dans la position de saisie.

10. Agencement de poignée selon l'une quelconque des revendications 1 à 9, **caractérisé en ce qu'**un creux de prise (21) pour saisir par le dessous l'anse de poignée (15, 16), est réalisé à proximité d'au moins l'une des anses de poignée (15, 16).

11. Agencement de poignée selon l'une quelconque des revendications 1 à 10, **caractérisé en ce que** l'une des anses de poignée (15, 16) est disposée sur une partie de support (32) pouvant pivoter autour d'un axe de pivotement supplémentaire (31), de laquelle dépasse un crochet (33) qui peut être accroché au véhicule automobile lorsque le couvercle (20) est entièrement rabattu vers le haut.

12. Agencement de poignée selon la revendication 11, **caractérisé en ce que** le crochet (33) peut être accroché dans la gouttière (34) en dessous de la vitre arrière (35).

13. Agencement de poignée selon la revendication 11 ou la revendication 12, **caractérisé en ce que** le crochet (33) dépasse vers le bas du côté de la partie de support (32) opposé à l'axe de pivotement supplémentaire (31).

14. Agencement de poignée selon l'une quelconque des revendications 11 à 13, **caractérisé en ce que** la partie de support (32) est précontrainte dans un évidement (19) du couvercle (20) et peut être pivotée vers le haut à l'encontre de la force d'un ressort autour de l'axe de pivotement supplémentaire (31).

15. Agencement de poignée selon l'une quelconque des revendications 11 à 14, **caractérisé en ce qu'**un frein doux amortit le mouvement de pivotement de la partie de support (32).
